# EUROPEAN PATENT SPECIFICATION

(11) **EP 3 327 902 B1**
(45) Date of publication and mention of the grant of the patent: **09.11.2022**
(21) Application number: 17202829.2
(22) Date of filing: 21.11.2017
(51) Int. Cl.: H02K 1/27, H02K 9/04, H02K 11/33

(54) **EXTERNAL-ROTOR ELECTRIC MOTOR**
AUSSENLÄUFER-ELEKTROMOTOR
MOTEUR ÉLECTRIQUE À ROTOR EXTERNE

(30) Priority: 23.11.2016 IT 201600118253
(43) Date of publication of application: 30.05.2018
(73) Proprietor: Regal Beloit Italy S.p.A., 20129 Milano (MI) (IT)
(72) Inventor: BRIVIO, Dario, I-24040 Ciserano - Loc. Zingonia (BG) (IT); ZANIBELLI, Michele, I-24040 Ciserano - Loc. Zingonia (BG) (IT); BREVIARIO, Fabio, I-24040 Ciserano - Loc. Zingonia (BG) (IT)
(74) Representative: Porta & Consulenti Associati S.p.A.

(56) References cited:
- EP-A2- 3 035 508
- WO-A1-2004/013944
- DE-A1- 19 727 164
- DE-U1-202015 105 804
- US-A1- 2014 306 559

## Description

The present invention relates to an external-rotor electric motor.

External-rotor electric motors, and in particular those with electronic control, for example with brushless motor, comprise a usually hollow stator body in which are contained the electronic devices necessary for the correct operation of the motor and a rotor body that extends away from the stator body. The stator body usually comprises a stator flange adapted to fasten the motor to a structure, while to the rotor body are usually fastened the devices using the motor, for example blades in the case of a fan.

The electronic devices contained in the rotor body are sources of heat which must be dissipated to prevent the motor from overheating with the consequent loss of efficiency or functionality thereof.

For this reason, usually to the stator body is associated a passive dissipater, realised by cooling fins with radial development, which increases the heat exchange surface area of the stator body to dissipate the heat generated therein. However, the dissipater associated with the stator body is insufficient by itself to assure an efficient dissipation of the heat generated and, for this reason, it is known providing the rotor body with aerodynamic appendages directly facing the dissipater of the stator body, so that the rotation of the rotor body creates a direct air flow from the exterior of the motor towards the dissipater of the stator body.

The air forced by the aerodynamic appendages of the rotor body on the dissipater of the stator body increases the heat exchange of the dissipater which is then able to dissipate a greater quantity of heat generated.

Documents DE202015105804U1, EP3035508A2, DE19727164A1, WO2004/013944A1 and US 2014/0306559 A1 disclose prior art examples of electric motors.

The Applicant has noted that it would be desirable to increase efficiency in the removal of the heat generated by the electronic devices.

However, the Applicant has perceived that simply expanding the heat exchange surface area of the dissipater of the stator body would also increase the aerodynamic interaction between the aerodynamic appendages and the dissipater of the stator body, causing an increase in turbulence in the cooling air flow.

The Applicant has perceived that this increase in turbulence theoretically improves the heat exchange by convection between the dissipater of the stator body and air, but practically it makes it very difficult if not impossible to generate a stable, foreseeable cooling flow which effectively impacts the dissipater of the stator body.

The present invention therefore relates to an external-rotor electric motor comprising:
- an internally hollow stator body, containing electronic devices for controlling the motor, said stator body comprising a first axial end from which emerges a shaft that extends axially away therefrom;

a rotor body rotatably fastened to the stator body around an axis of rotation and internally housing said shaft, said rotor body comprising a first axial end oriented towards the first axial end of the stator body;
a heat dissipater, positioned on said stator body at said first axial end thereof, and axially projecting towards said rotor body, wherein said heat dissipater comprises a plurality of bars;
an array of radial aerodynamic appendages positioned on said rotor body at said first axial end thereof;
a fairing ring fastened to said stator body at said first end and axially positioned between said stator body and said array of radial aerodynamic appendages, said fairing ring comprises a plurality of recesses positioned on a surface oriented towards said stator body, in which each bar comprises a first axial end directly fastened to the stator body and a second free axial end; said second free axial ends of said bars being inserted in said recesses.

In the present description and in the subsequent claims, the terms "axial", "axially" and the like refer to a direction coinciding with or parallel to an axis of rotation of the rotor of the electric motor; the terms "radial", "radially" and the like refer to a direction that lies in a plane that is substantially orthogonal to the axis of rotation of the rotor of the electric motor and that passes through said axis of rotation, the term "radially inner" refers to a radial position that is closer to the axis of rotation and the term "radially outer" refers to a position that is distal from the axis of rotation.

Term "bar" means an element with elongated shape in which the axial dimension is greater or of the same order of magnitude as the dimensions in the radial directions and in which the radial dimensions are preferably of the same order of magnitude with each other.

The rotation of the rotor body sets in rotation the array of aerodynamic appendages positioned at the first end thereof. The rotation of the aerodynamic appendages tends to take air in from the exterior of the stator body towards the array.

The Applicant has perceived that a fairing ring fastened to the stator body at the first end thereof where the plurality of bars of the heat dissipater is present, allows to guide the air taken in from the array of aerodynamic appendages radially towards the interior of the electric motor, i.e. towards the shaft.

The Applicant has also perceived that the plurality of bars of the heat dissipater increases the heat exchange of the heat dissipater because the air flow that traverses the dissipater laps all, or nearly all, the outer surface of each bar.

In this way, the synergic effect between fairing ring (which creates a channelled flow) and bars (which increase the heat exchange of the heat dissipater) allow effective cooling of the electric motor.

The Applicant has also observed that by fastening the fairing ring to the stator body, the rotor body does not need to be redesigned to assure a perfect balance of masses during its rotation. Furthermore, since the fairing ring is static, it is not subjected to centrifugal stresses that could compromise its functionality or that otherwise would need a careful design and dimensioning of the fairing ring.

Therefore, the fairing ring could be applied to the structure of existing external-rotor electric motors making modifications only to their stator body or in any case avoiding a complete redesign of the rotor body.

The external-rotor electric motor of the present invention can comprise one or more of the following preferred features, taken individually or in combination.

Preferably, said bars comprise respective development axes, parallel to each other and oriented in axial direction.

Preferably, said bars have cylindrical shape with circular base or with elliptical base or have prismatic shape.

Preferably, each bar comprises a first axial end and a second axial end opposite to the first end; said bars being tapered from the first axial end towards the second axial end.

This makes it possible, for example, to make the bars in a single piece with the stator body because it allows the extraction of the bars from the mould used to make the stator body and the bars simultaneously.

According to the invention, said fairing ring comprises a plurality of recesses positioned on a surface oriented towards said stator body and in which each bar comprises a first axial end directly fastened to the stator body and a second free axial end; said second free axial ends of said bars being inserted in said recesses.

In this way, the heat dissipater occupies the entire space in axial direction between the first end of the stator body and the fairing ring. All the air flow taken in from the exterior therefore traverses the heat dissipater maximising the cooling action of the heat dissipater.

Preferably, said bars are inserted in said recesses by a quantity between 10% and 25% of the axial height of the bars.

Preferably, said second free axial ends of the bar have flat surfaces coplanar with each other and perpendicular to the axis of rotation.

Preferably, said recesses of the fairing ring have circumferential development.

Preferably, said bars are positioned on circumferential rows radially distanced from each other and said bars are not aligned to each other in radial direction.

Preferably, the radially outer bars are contained in the radial bulk of the fairing ring.

Preferably, said stator body comprises an end flange positioned in said first axial end and provided with a first radially inner annular portion and a second radially outer annular portion; said heat dissipater extending on said radially outer annular portion of the end flange.

The heat dissipater then does not extend along the whole radial development of the stator body but along an annular portion positioned at the radial end of the end flange of the stator body.

In this way, the radially inner annular portion of the end flange serves as a deflector or as a bulkhead for the cooling air flow coming from the heat dissipater assuring that the cooling air flow traverses the entire heat dissipater before heading towards the aerodynamic appendages and being expelled radially outside the electric motor.

Preferably, said fairing ring comprises a radially inner edge and a radially outer edge; said radially inner edge being radially distanced from said shaft to define an annular passage for an air flow between the stator shaft and the fairing ring.

In this way, between fairing ring and shaft an annular passage is created which enables the cooling air flow to be directed towards the array of aerodynamic appendages without traveling through tortuous passages which would cause pressure drops in the cooling flow.

Preferably, a radially outer end of said head dissipater is positioned radially more internally than the radially outer edge of the fairing ring.

In this way, the fairing ring assures that the cooling air flow traverses the entire heat dissipater before being exhausted outside the electric motor by the array of aerodynamic appendages.

Preferably, a radially outer end of the array of radial aerodynamic appendages is positioned radially more internally than the outer edge of the fairing ring.

In this way, the fairing ring serves also as a deflector for the cooling air flow exiting the electric motor, preventing the heated air expelled radially from being immediately taken back into the heat dissipater. In other words, the fairing ring moves the region in which cooling air is taken in from the region from which hot air is expelled.

Preferably, a radially outer end of the array of radial aerodynamic appendages is positioned radially more internally than the radially outer end of said heat dissipater.

Preferably, a radially inner end of the array of radial aerodynamic appendages is positioned radially more internally than the inner edge of the fairing ring.

In this way, the surface area in the radial direction of the array of aerodynamic appendages is maximised, thereby maximising the action of the array of aerodynamic appendages.

Preferably, said array of radial aerodynamic appendages is obtained in a single piece with a closing flange of said rotor body.

This enables the array of radial aerodynamic appendages to serve also as stiffening elements of the closing flange of the rotor body.

Preferably, the array of radial aerodynamic appendages comprises a plurality of substantially rectilinear fins arranged radially in a ring on the closing flange of the rotor body.

Preferably, said fairing ring comprises a substantially flat surface oriented towards said rotor body.

Such a flat surface of the fairing ring makes it possible to channel the flow of air out of the electric motor and to minimise its pressure drops.

Further features and advantages of the invention will be more evident from the following description of preferred embodiments thereof, made with reference to the accompanying drawings. In such drawings:

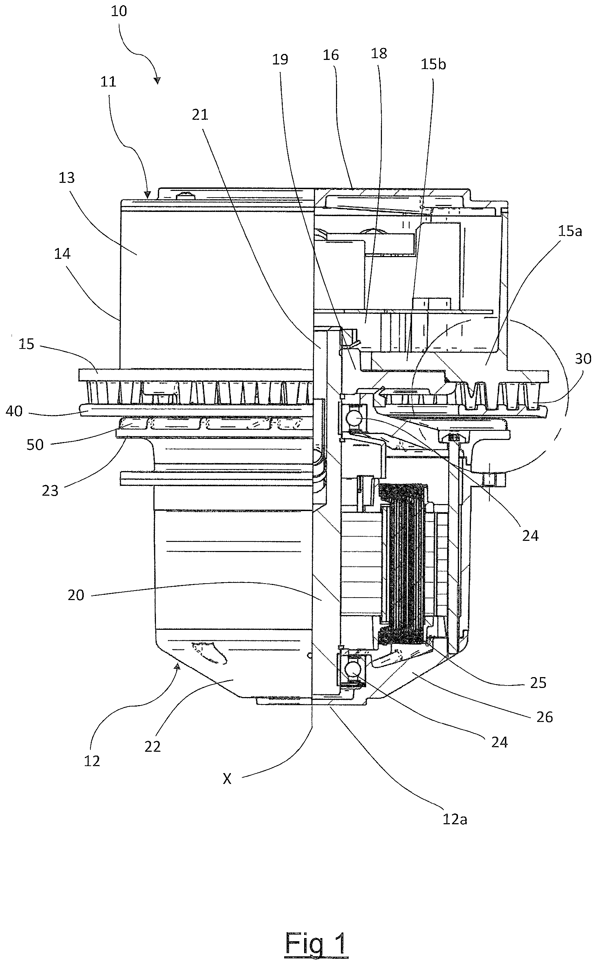

- figure 1 is a partially section front view of an external-rotor electric motor according to the invention;
- figure 2 is an exploded perspective view of some parts of the electric motor of figure 1; and
- figures 3 and 4 are enlarged views of some details of the electric motor of figure 1.

With reference to the accompanying drawings, a preferred embodiment of an external-rotor electric motor 10 in accordance with the present invention is shown.

The electric motor 10 comprises a stator body 11 and a rotor body 12 rotatably associated with the stator body 11 around an axis of rotation X.

The stator body 11 comprises an outer casing 13 comprising a substantially cylindrical lateral surface 14 and an end flange 15 positioned at an axial end of the stator body 11 and integral with the lateral surface 14. The end flange 15 has annular shape so as to define a central opening 15a.

The end flange 15 has greater radial extension than the radial extension of the lateral surface 14 and it is configured to be fastened to a support (not shown) to allow the installation of the electric motor.

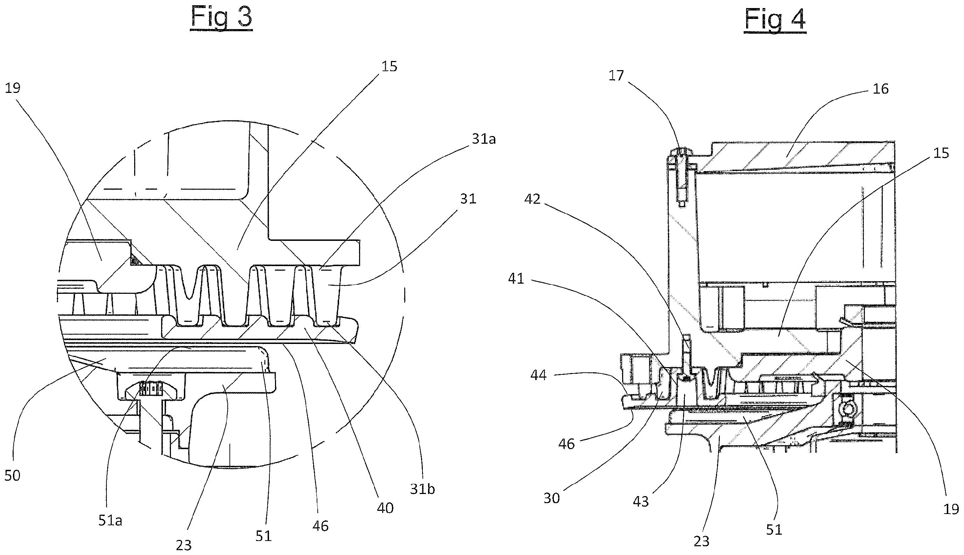

The outer casing 13 is closed at a second axial end 11b of the stator body by a lid 16 that is preferably removably associated with the lateral surface 15 by fastening screws 17 (shown in figure 3 and 4).

Inside the stator body 11 are provided electronic devices 18 whose function is to drive the rotor body 12 in a controlled manner.

The electronic devices 18 are mechanically fixed to the end flange 15 and thermally coupled thereto.

The stator body 11 further comprises a coupling flange 19 fastened to the end flange 15. The coupling flange 19 has annular shape to define a central opening 19a aligned to the central opening 15a of the end flange 15 and traversed by the axis of rotation X.

In the central opening 19a is fastened a shaft 20, which in the preferred embodiment of the invention is a stator shaft, which extends axially away, along the axis of rotation X, from the coupling flange 19. The stator shaft 20 is made integral with the coupling flange 19 and in particular it is fastened to the central opening 19a thereof. The stator shaft 20 has an inner cavity 21 open towards the stator body 11 to allow the passage of electrical connections between the electronic devices 18 and coils 25 of the stator winding contained in the rotor body 12.

The stator shaft 20 is inserted in the rotor body 12 and serves as a stator for it.

In particular, the rotor body 12 comprises a drum 22 open at a first axial end of the rotor body 12. The drum 22 is closed by an end lid 26 at a second axial end 12a of the rotor body 12 distal from the stator body 11. The first axial end of the rotor body 12, facing the stator body 11, comprises a closing flange 23 which has a central opening 23a for the passage of the stator shaft 20.

At the closing flange 23 and at the end lid 26 of the drum 22 of the rotor body 12 are provided rolling bearings 24 which support the rotor body 12 in rotation around the stator shaft 20.

The stator windings 25 are made integral with the stator body 20 in radially outer position thereto and within the drum 22 of the rotor body 12. The stator windings 25 interact with permanent magnets (not shown) integral with the drum 22 of the rotor body 12 in such a way as to set in rotation the drum 22 around the axis X.

To dissipate the heat generated by the electronics 18 contained in the stator body 11, a heat dissipater 30 is provided that is thermally coupled to the end flange 15 of the stator body 11.

The heat dissipater 30 is made in a single piece with the end flange 15.

The heat dissipater 30 has overall annular shape and it projects axially towards the rotor body 12. The extension of the heat dissipater 30 in the radial direction is smaller than the extension of the end flange 15 in the radial direction.

The end flange 15 comprises a first radially inner annular portion 15b and a second radially outer annular portion 15c. The radially inner portion 15b is fully contained in the bulk in the radial direction of the lateral surface 14 of the stator body 11, while the radially outer annular portion 15c extends beyond the radial edge of the lateral surface 14. The heat dissipater 30 extends on the radially outer annular portion 15c of the end flange 15.

The heat dissipater 30 comprises a plurality of bars 31 which develop axially from a first axial end 31a integral with the end flange 15 to a second free axial end 31b.

The shape of the bars 31 can be substantially cylindrical, realising a plurality of pegs, or it can be, alternatively or in combination, substantially prismatic.

In case of substantially cylindrical bars 31, the shape of the axial ends 31a, 31b of the bars can be circular or elliptical.

In the case of substantially prismatic bars 31, the shape of the axial ends 31a, 31b of the bars is polygonal (for example triangular, quadrangular, pentagonal and other).

The bars 31 are preferably tapered towards the second free axial ends 31b, so that the surface area of the second free ends 31b is smaller than the surface area of the first axial ends 31a of the bars 31.

The second free axial ends 31b have flat surfaces coplanar with each other and perpendicular to the axis of rotation X.

The bars 31 are arranged on circumferential rows radially distanced from each other. Moreover, the bars 31 are not aligned to each other in the radial direction.

To the end flange 15 is fastened a fairing ring 40. The fairing ring 40 is positioned at the side oriented towards the rotor body 12 and it is provided with spacers 41 (figure 4) to be able to be mounted axially distanced from the end flange 15. The mechanical coupling between the fairing ring 40 and the end flange 15 is achieved with screws 42 that engage cavities 43 of the aforementioned spacers 41, as shown schematically in figure 4.

The fairing ring 40 is axially closer to the rotor body 12 with respect to the heat dissipater 30, so as to serve as a fairing for it.

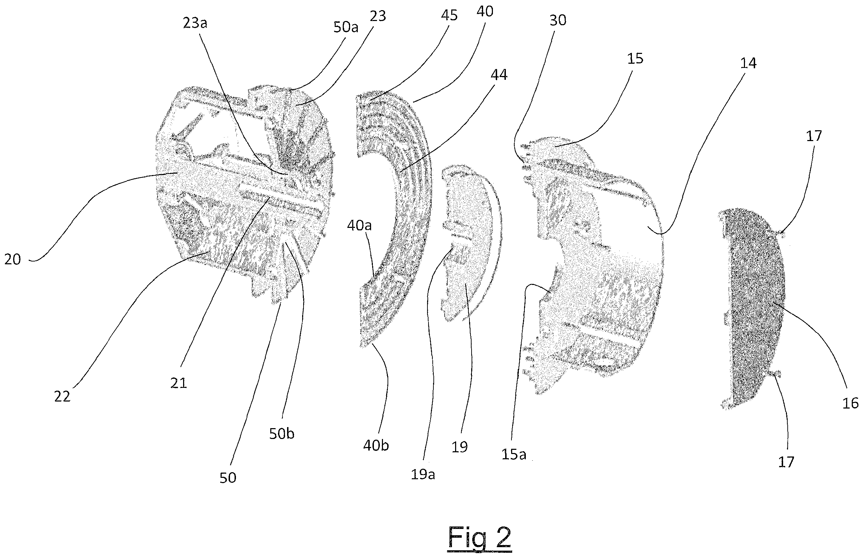

The surface 44 of the fairing ring oriented towards the stator body 11 comprises a plurality of recesses 45 with circumferential development, as shown in figure 2.

The number of recesses 45 with circumferential development is equal to the number of circumferential rows of bars 31.

The radial extension of the recesses 45 is greater than the radial extension of the free ends 31b of the bars 31 of the heat dissipater 30, so that the free ends 31b of the bars 31 can be received in the recesses 45.

The bars 31 are inserted into the recesses 45 by between 10% and 45% of the axial height of the bars 31, preferably by approximately 15% of the axial height of the bars 31.

The fairing ring 40 has a radially inner edge 40a and a radially outer edge 40b. The radially outer edge 40b is substantially axially aligned with the external radial end of the end flange 15, in such a way that the radially outermost bars 31 are contained in the radial bulk of the fairing ring 40. The radially inner edge 40a is radially distanced from the stator shaft 20 in such a way that there is an annular opening between the stator shaft 20 and the fairing ring 40.

At the side oriented towards the rotor body 12, the fairing ring has a substantially flat surface 46, not affected by the recesses 45.

The closing flange 23 of the rotor body 12 has, at the side oriented towards the stator body 11, an array of radial aerodynamic appendages 50.

The array of radial aerodynamic appendages 50 faces the flat surface 46 of the fairing ring 40 and distanced therefrom.

The array of radial aerodynamic appendages 50 has a radial extension that is substantially equal to the radial extension of the closing flange 23, as shown in figure 2.

The radially outer end 50a of the array of radial aerodynamic appendages 50 is positioned radially more internally than the outer edge 40b of the fairing ring 40. Preferably, the radially outer end 50a of the array of radial aerodynamic appendages 50 is axially aligned to the lateral surface 14 of the stator body 11, i.e. these two elements have substantially identical radial extension.

The radially inner end 50b of the array of radial aerodynamic appendages 50 is positioned radially more internally than the inner edge 40a of the fairing ring 40.

The array of aerodynamic appendages 50 is realised by a plurality of radial fins 51, rectilinear and radially directed towards the stator shaft 20.

The radial fins 51 are made in a single piece with the closing flange 23.

The axial end 51a of the radial fins 51 oriented towards the fairing ring 40 is substantially parallel to the plane defined by the surface 46 of the fairing ring 40. The distance of the axial end 51a of the radial fins 51 from the fairing ring 40 is the smallest possible compatible with the need to avoid the rubbing of the radial fins 51 against the fairing ring 40. For example, the distance of the axial end 51a of the radial fins 51 of the fairing ring 40 is between 1 mm and 5 mm.

In use, the rotation of the rotor body sets in rotation the radial fins 50 integral with the closing flange 23 of the rotor body 12.

The rotation of the radial fins 50 transmits energy to the air that bears thereon, increasing its pressure. The fairing ring 40, fixed to the stator body 11 and therefore not rotating, is, as stated above, facing the radial fins 50, preventing the air pressurised by the radial fins 50 from heading directly towards the stator body 11.

Therefore, a flow of pressurised air is generated which, from the exterior of the electric motor 10 is taken in from the rotation of the radial fins 50 and radially guided by the fairing ring through the bars 31 and towards the stator shaft 20.

When the flow of air reaches the inner edge 40a of the fairing ring 40, the air flow traverses the annular opening present between the stator shaft 20 and the inner edge 40a of the fairing ring 40 and is expelled from the array of aerodynamic appendages 50 radially towards the exterior of the electric motor where pressure is lower.

During its travel radially into the electric motor, the air flow impacts the bars 31 removing heat therefrom and dissipating the heat produced by the electronic devices contained in the stator body 11.

In particular, the air flow radially entering into the electric motor laps the lateral surface of each bar 31 of the heat dissipater 30.

Moreover, the air flow into the electric motor is fully utilised to cool the bars 31, since the free axial ends 31b of the bars are inserted in the grooves 45 of the fairing ring 40.

This configuration prevents the air flow from flowing between the heat dissipater 30 and the fairing ring 40 avoiding fully impacting the bars 31 of the heat dissipater 30. In other words, the fairing ring 40, receiving the free ends 31b of the bars 31 in its own grooves 45, makes the heat dissipater 30 free of any free projection in the axial direction.

Obviously, a person skilled in the art, to meet specific and contingent needs, may make numerous modifications and variants to the invention described above, for example providing curved radial fins, without thereby departing from the scope of protection of the present invention as defined by the following claims.

## Claims

1. External-rotor electric motor (10) comprising:
an internally hollow stator body (11), containing electronic devices (18) for operating the motor, said stator body (11) comprising a first axial end from which emerges a shaft (20) that extends axially away from the first axial end;
a rotor body (12) rotatably fastened to the stator body (11) around an axis of rotation (X) and internally housing said shaft (20), said rotor body (12) comprising a first axial end oriented towards the first axial end of the stator body (11);
a heat dissipater (30), positioned on said stator body (11) at said first axial end thereof, and projecting axially towards said rotor body (12);
an array of radial aerodynamic appendices (50) positioned on said rotor body (12) at said first axial end thereof;
a fairing ring (40) fastened to said stator body (11) at said first end and axially positioned between said stator body (11) and said array of radial aerodynamic appendices (50)
**characterized in that** said heat dissipater (30) comprises a plurality of bars (31) and said fairing ring (40) comprises a plurality of recesses (45) positioned on a surface (44) oriented towards said stator body (11), in which each bar (31) comprises a first axial end (31a) directly fastened to the stator body (11) and a second free axial end (31b); said second free axial ends (31b) of said bars (31) being inserted in said recesses (45).

2. Electric motor (10) according to claim 1, wherein said bars (31) comprise respective development axes, parallel to each other and oriented in the axial direction.

3. Electric motor (10) according to claim 1 or 2, wherein said bars (31) have cylindrical shape with circular base or with elliptical base or have prismatic shape.

4. Electric motor (10) according to any one of the preceding claims, wherein each bar comprises a first axial end (31a) and a second axial end (31b) opposite to the first end (31a); said bars (31) being tapered from the first axial end (31a) towards the second axial end (31b).

5. Electric motor (10) according to any one of the preceding claims, wherein said bars (31) are inserted in said recesses (45) by between 10% and 25% of the axial height of the bars (31).

6. Electric motor (10) according to any one of the preceding claims 1-4, wherein said second free axial ends (31b) of the bars (31) have flat surfaces coplanar to each other and perpendicular to the axis of rotation (X).

7. Electric motor (10) according to any one of the preceding claims 1-5, wherein said recesses (45) of the fairing ring (40) have circumferential development.

8. Electric motor (10) according to any one of the previous claims, wherein said bars (31) are arranged on circumferential rows radially distanced from each other and wherein said bars (31) are not aligned to each other in the radial direction.

9. Electric motor (10) according to any one of the previous claims, wherein the radially outermost bars (31) are contained in the radial extension of the fairing ring (40).

10. Electric motor (10) according to any of the preceding claims, wherein said fairing ring (40) comprises a radially inner edge (40a) and a radially outer edge (40b); said radially inner edge (40a) being radially distanced from said shaft (20) to define an annular passage for a flow of air between the shaft (20) and the fairing ring (40).

11. Electric motor (10) according to claim 10, wherein a radially inner end (50b) of the array of radial aerodynamic appendages (50) is positioned radially more internally than the radially inner edge (40b) of the fairing ring (40).

12. Electric motor (10) according to any one of the preceding claims, wherein said array of radial aerodynamic appendages (50) is obtained in a single piece with a closing flange (23) of said rotor body (12).

13. Electric motor (10) according to any one of the preceding claims, wherein said fairing ring (40) comprises one substantially flat surface (46) oriented towards said rotor body (12).

14. Electric motor (10) according to any one of the preceding claims, wherein the array of aerodynamic appendages (50) is obtained from a plurality of rectilinear radial fins (51) radially directed towards the shaft (20).

## Patentansprüche

1. Außenläufer-Elektromotor (10), umfassend:
einen innen hohlen Statorkörper (11), der elektronische Vorrichtungen (18) zum Betreiben des Motors enthält, wobei der Statorkörper (11) ein erstes axiales Ende aufweist, von dem eine Welle (20) ausgeht, die sich axial von dem ersten axialen Ende weg erstreckt;
einen Rotorkörper (12), der um eine Drehachse (X) drehbar am Statorkörper (11) befestigt ist und die Welle (20) im Inneren aufnimmt, wobei der Rotorkörper (12) ein erstes axiales Ende umfasst, das zum ersten axialen Ende des Statorkörpers (11) hin ausgerichtet ist;
einen Wärmeableiter (30), der auf dem Statorkörper (11) an dessen erstem axialen Ende angeordnet ist und axial zum Rotorkörper (12) hin vorsteht;
eine Anordnung radialer aerodynamischer Anhänge (50), die auf dem Rotorkörper (12) an dessen erstem axialen Ende angeordnet sind;
einen Verkleidungsring (40), der an dem ersten Ende des Statorkörpers (11) befestigt und axial zwischen dem Statorkörper (11) und der Anordnung radialer aerodynamischer Anhänge (50) angeordnet ist
**dadurch gekennzeichnet, dass** der Wärmeableiter (30) eine Vielzahl von Stäben (31) umfasst und der Verkleidungsring (40) eine Vielzahl von Ausnehmungen (45) umfasst, die auf einer zum Statorkörper (11) hin ausgerichteten Oberfläche (44) angeordnet sind, wobei jeder Stab (31) ein erstes axiales Ende (31a), das direkt am Statorkörper (11) befestigt ist, und ein zweites freies axiales Ende (31b) umfasst; wobei die zweiten freien axialen Enden (31b) der Stäbe (31) in die Ausnehmungen (45) eingesetzt werden.

2. Elektromotor (10) nach Anspruch 1, wobei die Stäbe (31) jeweils zueinander parallele und in axialer Richtung ausgerichtete Entwicklungsachsen aufweisen.

3. Elektromotor (10) nach Anspruch 1 oder 2, wobei die Stäbe (31) eine zylindrische Form mit kreisförmiger Basis oder mit elliptischer Basis oder eine prismatische Form aufweisen.

4. Elektromotor (10) nach einem der vorstehenden Ansprüche, wobei jeder Stab ein erstes axiales Ende (31a) und ein zweites axiales Ende (31b) gegenüber dem ersten Ende (31a) umfasst; wobei sich die Stäbe (31) vom ersten axialen Ende (31a) zum zweiten axialen Ende (31b) hin verjüngen.

5. Elektromotor (10) nach einem der vorstehenden Ansprüche, wobei die Stäbe (31) um 10 % bis 25 % der axialen Höhe der Stäbe (31) in die Ausnehmungen (45) eingesetzt sind.

6. Elektromotor (10) nach einem der vorstehenden Ansprüche 1-4, wobei die zweiten freien axialen Enden (31b) der Stäbe (31) ebene Oberflächen aufweisen, die koplanar zueinander und senkrecht zur Drehachse (X) sind.

7. Elektromotor (10) nach einem der vorstehenden Ansprüche 1 bis 5, wobei die Ausnehmungen (45) des Verkleidungsrings (40) in Umfangsrichtung verlaufen.

8. Elektromotor (10) nach einem der vorstehenden Ansprüche, wobei die Stäbe (31) auf radial voneinander beabstandeten Umfangsreihen angeordnet sind und wobei die Stäbe (31) in radialer Richtung nicht zueinander ausgerichtet sind.

9. Elektromotor (10) nach einem der vorstehenden Ansprüche, wobei die radial äußersten Stäbe (31) in der radialen Verlängerung des Verkleidungsrings (40) enthalten sind.

10. Elektromotor (10) nach einem der vorstehenden Ansprüche, wobei der Verkleidungsring (40) eine radial innere Kante (40a) und eine radial äußere Kante (40b) umfasst; wobei die radial innere Kante (40a) radial von der Welle (20) beabstandet ist, um einen ringförmigen Durchgang für einen Luftstrom zwischen der Welle (20) und dem Verkleidungsring (40) zu definieren.

11. Elektromotor (10) nach Anspruch 10, wobei ein radial inneres Ende (50b) der Anordnung radialer aerodynamischer Anhänge (50) radial weiter innen angeordnet ist als die radial innere Kante (40b) des Verkleidungsrings (40).

12. Elektromotor (10) nach einem der vorstehenden Ansprüche, wobei die Anordnung radialer aerodynamischer Anhänge (50) in einem einzigen Stück mit einem Abschlussflansch (23) des Rotorkörpers (12) erhalten wird.

13. Elektromotor (10) nach einem der vorstehenden Ansprüche, wobei der Verkleidungsring (40) eine im Wesentlichen flache Oberfläche (46) umfasst, die zum Rotorkörper (12) hin ausgerichtet ist.

14. Elektromotor (10) nach einem der vorstehenden Ansprüche, wobei die Anordnung aerodynamischer Anhänge (50) aus einer Vielzahl von geradlinigen radialen Rippen (51) erhalten wird, die radial zur Welle (20) hin gerichtet sind.

## Revendications

1. Moteur électrique à rotor externe (10) comprenant :
un corps de stator intérieurement creux (11), contenant des dispositifs électroniques (18) pour faire fonctionner le moteur, ledit corps de stator (11) comprenant une première extrémité axiale à partir de laquelle émerge un arbre (20) qui s'étend axialement à distance de la première extrémité axiale ;
un corps de rotor (12) fixé de manière rotative au corps de stator (11) autour d'un axe de rotation (X) et logeant intérieurement ledit arbre (20), ledit corps de rotor (12) comprenant une première extrémité axiale orientée vers la première extrémité axiale du corps de stator (11) ;
un dissipateur thermique (30), positionné sur ledit corps de stator (11) à ladite première extrémité axiale de celui-ci, et faisant saillie axialement vers ledit corps de rotor (12) ;
un ensemble d'appendices aérodynamiques radiaux (50) positionnés sur ledit corps de rotor (12) à ladite première extrémité axiale de celui-ci ;
une bague de carénage (40) fixé audit corps de stator (11) à ladite première extrémité et positionné axialement entre ledit corps de stator (11) et ledit ensemble d'appendices aérodynamiques radiaux (50)
**caractérisé en ce que** ledit dissipateur thermique (30) comprend une pluralité de barres (31) et ladite bague de carénage (40) comprend une pluralité d'évidements (45) positionnés sur une surface (44) orientés vers ledit corps de stator (11), dans lequel chaque barre (31) comprend une première extrémité axiale (31a) fixée directement au corps de stator (11) et une seconde extrémité axiale libre (31b) ; lesdites secondes extrémités axiales libres (31b) desdites barres (31) étant insérées dans lesdits évidements (45).

2. Moteur électrique (10) selon la revendication 1, dans lequel lesdites barres (31) comprennent des axes de développement respectifs, parallèles les uns aux autres et orientés dans la direction axiale.

3. Moteur électrique (10) selon la revendication 1 ou 2, dans lequel lesdites barres (31) ont une forme cylindrique avec une base circulaire ou avec une base elliptique ou ont une forme prismatique.

4. Moteur électrique (10) selon l'une quelconque des revendications précédentes, dans lequel chaque barre comprend une première extrémité axiale (31a) et une seconde extrémité axiale (31b) opposée à la première extrémité (31a) ; lesdites barres (31) étant effilées de la première extrémité axiale (31a) vers la seconde extrémité axiale (31b).

5. Moteur électrique (10) selon l'une quelconque des revendications précédentes, dans lequel lesdites barres (31) sont insérées dans lesdits évidements (45) entre 10% et 25% de la hauteur axiale des barres (31).

6. Moteur électrique (10) selon l'une quelconque des revendications précédentes 1 à 4, dans lequel lesdites secondes extrémités axiales libres (31b) des barres (31) ont des surfaces planes coplanaires entre elles et perpendiculaires à l'axe de rotation (X).

7. Moteur électrique (10) selon l'une quelconque des revendications précédentes 1 à 5, dans lequel lesdits évidements (45) de la bague de carénage (40) ont un développement circonférentiel.

8. Moteur électrique (10) selon l'une quelconque des revendications précédentes, dans lequel lesdites barres (31) sont disposées sur des rangées circonférentielles radialement distantes les unes des autres et dans lequel lesdites barres (31) ne sont pas alignées les unes par rapport aux autres dans la direction radiale.

9. Moteur électrique (10) selon l'une quelconque des revendications précédentes, dans lequel les barres radialement les plus à l'extérieur (31) sont contenues dans l'extension radiale de la bague de carénage (40).

10. Moteur électrique (10) selon l'une quelconque des revendications précédentes, dans lequel ladite bague de carénage (40) comprend un bord radialement intérieur (40a) et un bord radialement extérieur (40b) ; ledit bord radialement intérieur (40a) étant radialement espacé dudit arbre (20) pour définir un passage annulaire pour un flux d'air entre l'arbre (20) et la bague de carénage (40).

11. Moteur électrique (10) selon la revendication 10, dans lequel une extrémité radialement intérieure (50b) de l'ensemble d'appendices aérodynamiques radiaux (50) est positionnée radialement plus à l'intérieur que le bord radialement intérieur (40b) de la bague de carénage (40).

12. Moteur électrique (10) selon l'une quelconque des revendications précédentes, dans lequel ledit ensemble d'appendices aérodynamiques radiaux (50) est obtenu en une seule pièce avec une bride de fermeture (23) dudit corps de rotor (12).

13. Moteur électrique (10) selon l'une quelconque des revendications précédentes, dans lequel ladite bague de carénage (40) comprend une surface sensiblement plane (46) orientée vers ledit corps de rotor (12).

14. Moteur électrique (10) selon l'une quelconque des revendications précédentes, dans lequel l'ensemble d'appendices aérodynamiques (50) est obtenu à partir d'une pluralité d'ailettes radiales rectilignes (51) dirigées radialement vers l'arbre (20).
